# EUROPEAN PATENT SPECIFICATION

(11) **EP 1 458 551 B1**
(45) Date of publication and mention of the grant of the patent: **31.08.2005**
(21) Application number: 02795424.7
(22) Date of filing: 19.12.2002
(51) Int. Cl.: B29C 53/04, F16L 59/06, E04B 1/80

(54) **METHOD FOR PRODUCING THERMO-INSULATING CYLINDRICAL VACUUM PANELS AND PANELS THEREBY OBTAINED**
VERFAHREN ZUR HERSTELLUNG VON WÄRMEDÄMMENDEN, ZYLINDERFÖRMIGEN ISOLIER-VAKUUMPLATTEN UND DADURCH HERGESTELLTE ISOLIER-VAKUUMPLATTEN
PROCEDE DE FABRICATION DE PANNEAUX CYLINDRIQUES THERMO-ISOLANTS ET PANNEAUX AINSI OBTENUS

(30) Priority: 27.12.2001 IT MI20012812
(43) Date of publication of application: 22.09.2004
(73) Proprietor: SAES GETTERS S.p.A., 20020 Lainate (Milano) (IT)
(72) Inventor: DI GREGORIO, Pierattilio, I-67039 Sulmona Aq (IT)
(74) Representative: Adorno, Silvano
(86) International application number: PCT/IT2002/000808
(87) International publication number: WO 2003/059600

(56) References cited:
- WO-A-02/02986
- WO-A-02/02987
- US-A- 5 869 407
- US-A- 6 110 310

## Description

The present invention relates to a method for producing thermo-insulating cylindrical vacuum panels and to the panels thereby obtained.

Vacuum panels, and particularly those made with plastic materials, are being increasingly used in all the fields wherein a thermo-insulation at temperatures lower than about 100 °C is required. As examples of applications can be mentioned the walls of domestic and industrial refrigerators, of the beverages dispensing machines (wherein thermo-insulation is required mainly in order to separate the portion of the hot drinks, generally at about 70 °C, from that of the cold drinks), or of the containers for isothermal transportation, for example of drugs or cold or frozen food. Applications of these panels are being studied also in the building field or in the car industry.

As known, a vacuum panel is formed of an envelope inside which a filling material is present.

The envelope has the function of preventing (or reducing as much as possible) the inlet of atmospheric gases inside the panel, so as to keep a vacuum grade compatible with the thermo-insulation level required by the application. To this purpose, the envelope is made with so-called "barrier" sheets, of thickness generally not greater than 100 µm, characterized by a gas permeability being as low as possible. These sheets can be formed of a single component but more frequently are multi-layers of different components; in the case of multilayers the barrier effect is conferred by one of the component layers (generally metallic and commonly of aluminium), whereas the other layers generally have functions of mechanical support and protection of the barrier layer.

The filling material has the function of spacing apart the two opposite faces of the envelope when vacuum is created in the panel. This filling material can be inorganic, such as silica powder, glass fibers, aerogels, diatomaceous earth, etc., or organic, such as rigid foams of polyurethane or polystyrene, both in the form of boards and of powders. Materials more commonly used are open cells polyurethane foams (open cells are necessary to allow their evacuation through mechanical pumping) and, in the case of panels which must resist to temperatures higher than about 150 °C, silica powder (generally of submicronic dimensions). The filling material must be anyway porous or discontinuous, so that the pores or the interstices can be evacuated. Since the permeation of traces of atmospheric gases into the panel is practically unavoidable, these panels contain in most cases also one or more materials (generally referred to as getter materials) capable of sorbing these gases so as to maintain the pressure inside the panel at the desired values.

Vacuum panels generally have a planar configuration and can hence be used to insulate substantially parallelepiped bodies, having planar surfaces, but they are not suitable for bodies having substantially cylindrical walls, such as for example bath-heaters or the pipings used for oil transport in the arctic regions.

One of the methods used so far to obtain the thermo-insulation of bodies having non-planar surfaces consists in connecting to each other several flat panels in the shape of bands, for example by gluing together their edges, thus obtaining a composite structure which can be bent along the junction lines so as to adapt it to the shape of the body which has to be insulated. However, in this kind of structures heat transfers take place at the junctions, and therefore the quality of the heat insulation at these zones is poor; furthermore, a structure made up of planar parts can only approximate a curved surface, hence there are areas of scarce contact between the panel and the body to be insulated with formation of air chambers and, again, decreasing of the efficiency of the insulation.

International patent application WO96/32605 in the name of the British company ICI describes rigid vacuum panels having a non-planar shape and a method for the manufacture thereof, which consists in making in the filling material grooves arranged in a desired direction and having suitable width and depth. Subsequently, the filling material is inserted into an envelope and the assembly is subjected to the evacuating step. Finally, the evacuated panel is sealed. A thus produced panel, at its first exposure to the atmosphere, spontaneously bends along the grooves formed in the filling material.

This production method has however some drawbacks. First of all, it has been observed that in the course of said evacuation the envelope adheres to the filling material and becomes at least partially inserted into said grooves so that, when the evacuation is completed, the thickness of the panel is not uniform in all the parts thereof, but is lower at the bending lines with respect to the planar portions of the same panel. Consequently, also the thermo-insulation properties are not uniform, but are reduced along these bending lines. Moreover, another drawback consists in the risk of cracks formation in the envelope, which is pressed inside the grooves, thus enabling the passage of atmospheric gases towards the inside of the panel which compromises permanently the properties of thermo-insulation of the panel itself. Finally, as the bending of these panels occurs spontaneously during the first exposure to air, the panels occupy a notable volume soon after production, which makes it economically very onerous their storage and transportation. Another inconvenience of the method of the above mentioned international application is that it can be used only when the filling material is a board, for example of a polymeric foam, but not in the case of discontinuous materials such as powders or fibres.

Therefore, object of the present invention is to provide a method for producing thermo-insulating cylindrical vacuum panels, as well as to provide the resulting panels which are free from the drawbacks of the prior art.

Said objects are achieved according to the present invention, which in a first aspect thereof relates to a method for producing thermo-insulating cylindrical vacuum panels comprising the steps of:
- manufacturing a planar vacuum panel according to any known procedure; and
- curving the panel through calendering.

The operation of calendering is well known and applied in the mechanical field for curving metallic plates, that is, plates of materials having features of plastic deformation. Inventors however have found that this operation can be successfully applied also in the case of vacuum panels. This possibility was not foreseeable because of the discontinuity of the filling materials of the panels, characteristic which does not allow to evaluate previously the mechanical properties (particularly the deformation behavior under mechanical stress); furthermore, in case of panels filled with polymeric foams, these are generally fragile, and the breaking of the foam board could have been expected

The term cylinder and the derived terms as used in the present invention have a broad meaning, that is, they may be referred to cylindrical surfaces having a base with constant curving radius (that is with circular base, according to the more common use of the term) but also with variable curving radius (for example, ellipsoidal or irregularly shaped).

The invention will be described in the following with reference to the drawings wherein:
- fig. 1 shows a sectional view of the calendering operation of an originally planar panel;
- fig. 2 shows a finished cylindrical panel.

Panels to be subjected to calendering can be of any known type, obtained through any combination of kind of envelope and filling material, with or without getter material. The production of planar vacuum panels is well known; for a description of these panels and of methods for the production thereof it is to be referred to a broadly available literature, among which for example patents US 4,726,974 and US 5,943,876, and patent applications WO96/32605, EP-A-437930 and JP-A-7-195385.

Lateral dimensions of planar panels to be used can be anyone, while the thickness has generally a maximum value depending on the filling material; obviously there is not a lower thickness limit required by the possibility of carrying out the calendering operation, but the thickness of the panel must be such as to ensure good thermo-insulation properties, which would require the use of relatively high thickness values. The thickness values really used are derived from the compromise between these two opposite needs; for example, in the case of polyurethane foam boards, the thickness is generally lower than 20 mm, preferably comprised between 8 and 15 mm; in the case of panels with filling of silica powder thickness can vary between about 5 and 20 mm.

The calendering operation is carried out according to the procedures known in the mechanical field, by passing the planar vacuum panel between at least two rollers and a third element of length equal at least to that of the rollers and placed parallel to the "nip" between the first two rollers; this third element is, generally, a third roller. As already known, by properly adjusting the position of the third element, and in particular its distance with respect to the nip between the two rollers and its height from the geometrical plane containing the still flat portion of the body to be curved, it is possible to determine the curving radius of the final product.

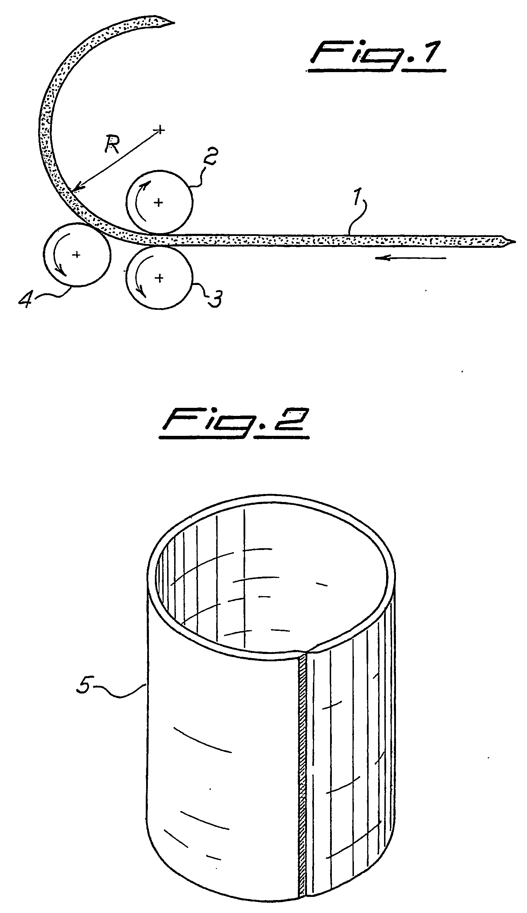

The operation is schematically shown in section in figure 1: vacuum panel 1 is moved forward from right to left by the co-ordinate moving of rollers 2 and 3 (whose direction of rotation is indicated by arrows), and forced to slide on the third roller 4, which curves it upwardly giving a curving of radius R. The curving radius decreases when roller 4 is moved toward right (getting it nearer to the nip between rollers 2 and 3) or upwardly in the drawing, and on the contrary it increases with opposite movements. Cylindrical panels having a non circular base can thus be obtained by modifying continuously during the calendering operation the position of roller 4 as described above.

The calendering operation can even be carried out simultaneously on the planar panel and on another element, such as for example a layer of an adhesive polymeric foam placed on one face of the panel (or on both of them). In this case it is obtained a cylindrical panel which has already, on one of its external or internal surfaces (or both) a layer of adhesive material, useful for fixing the same panel to a wall of the interspace intended to contain it. This interspace can be for example that of a concentric double tube piping for isothermal transportation of petroleum, to prevent its heavy fraction from condensing in cold areas obstructing the piping; or interspaces of boilers, for example of water-heaters for domestic use, to reduce the thermal dissipation for energetic saving purposes. To help the fixing of the panel to a wall of the interspace, it is preferable that it has a curving radius slightly different from the one of said wall, and in particular slightly lower if the surface of the cylindrical panel to be put in contact with the wall is the internal one, and vice versa.

The method of the invention has in particular the advantage that the panels can be bent, with a simple and cheap equipment, just before they are fixed in the final utilization place; hence the transportation or the storage of big volume products at the store of the manufacturer or of the final user, is not required.

Figure 2 shows a vacuum panel, 5, bent according to the method described up to this point. This is different from the panels of the international patent application WO96/32605 especially because it has not grooves on the internal surface, and thus has more uniform properties of thermo-insulation.

## Claims

1. A method for producing cylindrical vacuum panels comprising the steps of:
- producing a planar vacuum panel according to any known procedure; and
- curving the panel through calendering.

2. A method according to claim 1 wherein said calendering operation is carried out by passing the planar vacuum panel between at least two rollers (2, 3) and a third element of length equal at least to that of the rollers and placed parallel to said two rollers.

3. A method according to claim 2 wherein said third element is a third roller (4).

4. A method according to claim 1 wherein said planar vacuum panel comprises, as filling material, rigid polyurethane foam, and has a thickness lower than 20 mm.

5. A method according to claim 4 wherein said panel has a thickness comprised between 8 and 15 mm.

6. A method according to claim 1 wherein said planar vacuum panel comprises, as filling material, silica powder, and has a thickness comprised between about 5 and 20 mm.

7. A method according to claim 2 wherein the position of said third element is continuously modified during the calendering operation.

8. A method according to claim 1 wherein said calendering operation is carried out simultaneously on the planar panel and on at least a layer of an adhesive polymeric foam placed on at least one surface of the panel.

9. A cylindrical vacuum panel (5) obtained according to the method of claim 1.

10. A cylindrical vacuum panel with at least a layer of an adhesive polymeric foam adhering to at least one surface of the panel, obtained according to the method of claim 8.

11. A cylindrical vacuum panel with non circular curving base obtained according the method of claim 7.

## Patentansprüche

1. Verfahren zur Herstellung zylindrischer Vakuumpaneele, umfassend die Schritte:
- Herstellen eines planaren Vakuumpaneels nach irgendeinem bekannten Verfahren, und
- Biegen des Paneels durch Kalandrieren.

2. Verfahren nach Anspruch 1, indem das Kalandrieren durch Führen des planaren Vakuumpaneels zwischen mindestens zwei Walzen (2, 3) und einem dritten Element von mindestens der gleichen Länge wie diese Walzen, und das parallel zu diesen zwei Walzen angeordnet ist, vorgenommen wird.

3. Verfahren nach Anspruch 2, in dem das dritte Element eine dritte Walze (4) ist.

4. Verfahren nach Anspruch 1, in dem das planare Vakuumpaneel als Füllmaterial Polyurethanhartschaum enthält und eine Dicke von weniger als 20 mm hat.

5. Verfahren nach Anspruch 4, in dem das Paneel eine Dicke von zwischen 8 und 15 mm hat.

6. Verfahren nach Anspruch 1, in dem das planare Vakuumpaneel als Füllmaterial Sillica-Pulver enthält und eine Dicke von zwischen et wa 5 und 20 mm hat.

7. Verfahren nach Anspruch 2, in dem die Position des dritten Elements während des Kalandrierens fortlaufend verändert wird.

8. Verfahren nach Anspruch 1, in dem der Kalandrierungsschritt gleichzeitig mit dem planaren Paneel und mit mindestens einer Schicht eines adhäsiven polymeren Schaums, die auf mindestens einer Oberfläche des Paneels angeordnet ist, durchgeführt wird.

9. Zylindrisches Vakuumpaneel (5), das durch das Verfahren nach Anspruch 1 erhalten worden ist.

10. Zylindrisches Vakuumpaneel mit mindestens einer Schicht eines adhäsiven polymeren Schaums, die auf mindestens einer Oberfläche des Paneels haftet, das nach dem Verfahren gemäß Anspruch 8 erhalten worden ist.

11. Zylindrisches Vakuumpaneel mit nicht kreisförmig gekrümmter Grundplatte, das nach dem Verfahren gemäß Anspruch 7 erhalten worden ist.

## Revendications

1. Procédé pour produire des panneaux à vide cylindriques comprenant les étapes de :
- produire un panneau à vide planaire, selon toute procédure connue ; et
- plier le panneau par le biais d'un calandrage.

2. Procédé selon la revendication 1, dans lequel l'opération de calandrage est effectuée en passant le panneau à vide planaire entre deux rouleaux (2, 3) et un troisième élément de longueur égale à au moins celle d'un rouleau et placée en parallèle audit deux rouleaux.

3. Procédé selon la revendication 2, dans lequel ledit troisième élément est un troisième rouleau (4).

4. Procédé selon la revendication 1, dans lequel ledit panneau à vide planaire comprend, comme matériau de remplissage, une mousse en polyuréthane rigide et a une épaisseur inférieure à 20mm.

5. Procédé selon la revendication 4, dans lequel ledit panneau a une épaisseur comprise entre 8 et 15mm.

6. Procédé selon la revendication 1, dans lequel ledit panneau à vide planaire comprend, comme matériau de remplissage, de la poudre de dioxyde de silicium, et a une épaisseur comprise entre environ 5 et 20 mm.

7. Procédé selon la revendication 2, dans lequel l'emplacement dudit troisième élément est continuellement modifié lors de l'opération de calandrage.

8. Procédé selon la revendication 1, dans lequel ladite opération de calandrage est effectuée simultanément sur le panneau planaire et sur au moins une couche d'une mousse polymérique adhésive placée sur au moins une surface du panneau.

9. Panneau à vide cylindrique (5) obtenu selon le procédé de la revendication 1.

10. Panneau à vide cylindrique avec au moins une couche d'une mousse polymérique adhésive adhérant à au moins une surface du panneau, obtenu selon le procédé de la revendication 8.

11. Panneau à vide cylindrique avec une base de pliage circulaire obtenu selon le procédé de la revendication 7.
